## Europäisches Patentamt
## European Patent Office
## Office européen des brevets

(19)

(11) Veröffentlichungsnummer: **0 158 990**
**B1**

(12) **EUROPÄISCHE PATENTSCHRIFT**

(45) Veröffentlichungstag der Patentschrift: 23.05.90

(51) Int. Cl.⁵: **B 60 N 2/08**

(21) Anmeldenummer: **85104471.9**

(22) Anmeldetag: **12.04.85**

(54) Kraftfahrzeugsitz.

(30) Priorität: 18.04.84 DE 3414649

(43) Veröffentlichungstag der Anmeldung:
23.10.85 Patentblatt 85/43

(45) Bekanntmachung des Hinweises auf die
Patenterteilung:
23.05.90 Patentblatt 90/21

(84) Benannte Vertragsstaaten:
DE FR GB IT SE

(56) Entgegenhaltungen:
DE-A-2 027 884
DE-A-2 400 898
DE-A-2 826 634
DE-A-3 143 118
DE-U-7 802 165
FR-A-2 526 733

(73) Patentinhaber: Adam Opel Aktiengesellschaft
Bahnhofsplatz 1 Postfach 1560
D-6090 Rüsselsheim (DE)

(72) Erfinder: Stolper, Richard
Röntgenstrasse 4
D-6095 Ginsheim-Gustavsburg (DE)
Erfinder: Adler, Theo
Rodensteinstrasse 75
D-6140 Bensheim (DE)
Erfinder: Kussmann, Lutz, Dipl.-Ing.
Am Mittelpfad 25
D-6097 Trebur 2 (DE)

(74) Vertreter: Rosenfeld, Jürgen, Dipl. Ing. et al
Adam Opel Ag Patentabteilung Bahnhofsplatz 1
Postfach 17 10
D-6090 Rüsselsheim (DE)

Courier Press, Leamington Spa, England.

**Beschreibung**

Die Erfindung bezieht sich auf einen Kraftfahrzeugsitz, der mit zwei an ihm befestigten Oberschienen in ortsfesten Unterschienen verschieblich geführt ist, einen entriegelbaren Feststeller zur Arretierung des Kraftfahrzeugsitzes in gewünschte Positionen auf der Unterschiene aufweist und an dem eine ein Gurtschloß aufnehmende Lasche befestigt ist, die eine Unterschiene vollständig umgreift. Einderartiger Kraftfahrzeugsitz ist beispielsweise in der DE-24 00 898 beschrieben.

Bei solchen Kraftfahrzeugsitzen ist es wünschenswert, die bei einem Unfall auftretenden Gurtkräfte möglichst direkt in den Fahrzeugunterbau einzuleiten. Bei längsverstellbaren Fahrzeugsitzen kann man jedoch die die Gurtschlösser aufnehmenden Laschen nicht unmittelbar am Fahrzeugunterbau befestigen, da zum sicheren Anschnallen einer Person es erforderlich ist, daß die Gurtschlösser sich unabhängig von der Verstellung des Sitzes stets an einer bestimmten Stelle des Sitzes befinden. Die die Gurtschlösser tragenden Laschen müssen deshalb mit dem Fahrzeugsitz gemeinsam verschieblich sein.

Gemäß der bereits genannten DE-A-24 00 898 greift die ein Gurtschloß aufnehmende Lasche vollständig über die Unterschiene. Die Unterschiene weist eine Verzahnung auf, in die eine Sperre der Lasche einzugreifen vermag, wenn sich bei einem Unfall die Lasche infolge der Zugkräfte am Gurt deformiert. Dadurch kommt es bei einem Unfall zu einer Verbindung der Lasche mit der Unterschiene. Bei einer normalen Sitzverstellung vermag die Sperre nicht in die Verzahnung einzugreifen, so daß durch die Lasche das Längsverschieben des Kraftfahrzeugsitzes nicht behindert ist.

Funktionell gleichartige Kraftfahrzeugsitze sind auch in der DE-A-20 27 884 und der DE-A-28 26 634 beschrieben. Bei allen Ausführungen behindern die das Gurtschloß aufnehmenden Bauteile die Längsverstellung des Kraftfahrzeugsitzes nicht, sollen aber im Augenblick eines Unfalls eine feste Verbindung zwischen Gurtschloß und Unterschiene herstellen.

Nachteilig bei den bekannten Kraftfahrzeugsitzen ist es, daß sowohl für die das Gurtschloß tragende Lasche als auch für den Feststeller über den gesamten Verstellbereich des Kraftfahrzeugsitzes an der Unterschiene Rasten vorgesehen werden müssen und der Kraftfahrzeugsitz zwei Verrastungsmechanismen benötigt, nämlich einen, der bei der normalen Sitzlängsverstellung wirksam wird und einen, der im Falle eines Unfalls die das Gurtschloß aufnehmende Lasche mit der Unterschiene verrastet.

Hiervon abgesehen besteht bei den vorbekannten Kraftfahrzeugsitzen das problem, daß ein nicht ordnungsgemäß verriegelter Kraftfahrzeugsitz im Augenblick eines Unfalls zunächst in seinen Unterschienen mit beträchtlichem Schwung nach vorne rutscht, ehe es zu einer Verriegelung durch die die Unterschienen umgreifenden Laschen kommt. Es treten deshalb sehr hohe Kräfte auf, so daß die beanspruchten Bauteile entsprechend stark bemessen sein müssen.

Der Erfindung liegt die Aufgabe zugrunde, einen Kraftfahrzeugsitz der eingangs genannten Art derart zu gestalten, daß mit nur einem einzigen Verrastungsmechanismus und möglichst geringem Materialaufwand der Kraftfahrzeugsitz bei Längsverstellung feststellbar und die das Gurtschloß aufnehmende Lasche verriegelbar ist.

Diese Aufgabe wird erfindungsgemäß dadurch gelöst, daß an der Lasche eine den Feststeller bildende Klinke vorgesehen ist, welche mittels eines Hebels aus Rasten bildende Durchbrechungen der Unterschiene bewegbar ausgebildet ist.

Bei einem solchen Kraftfahrzeugsitz ist bei nicht betätigtem Feststeller die das Gurtschloß aufnehmende Lasche stets mit der Unterschiene verrastet. Dadurch ist auch der Kraftfahrzeugsitz selbst auf der Unterschiene in Längsrichtung verriegelt. Dank der Erfindung genügt nur ein einziger Verriegelungsmechanismus, um diese beiden Verriegelungen zu bewirken. Der konstruktive Aufwand ist deshalb erheblich geringer als bei den vorbekannten Konstruktionen, ohne daß dadurch irgendwelche Vorteile verlorengingen. Der erfindungsgemäße Kraftfahrzeugsitz ist sogar sicherer als die vorbekannten Sitze, bei denen die Gefahr besteht, daß bei einem Unfall die dann erforderliche Verrastung aus nicht vorhersehbaren Gründen doch nicht erfolgt. Bei dem erfindungsgemäßen Kraftfahrzeugsitz ist die das Gurtschloß aufnehmende Lasche schon beim normalen Fahrbetrieb mit der Unterschiene verrastet.

Eine vorteilhafte Ausgestaltung der Erfindung besteht darin, daß die Unterschiene aus einem nach oben offenen Hohlprofil und einem nach unten gerichteten Steg besteht. Durch diesen Steg erhöht sich mit minimalem Materialeinsatz das Widerstandsmoment der Unterschiene gerade in der Richtung sehr stark, in der im Falle eines Unfalls die Hauptkräfte vom Anschnallgurt her wirken.

Besonders sicher ist sowohl der Sitz in seiner jeweils gewünschten Position auf den Unterschienen und die das Gurtschloß aufnehmende Lasche mit der Unterschiene verbunden, wenn die Rasten durch in einer Reihe hintereinander vorgesehenen Durchbrechungen in dem Steg der Unterschiene gebildet sind und die Lasche beidseitig der Unterschiene entsprechende Öffnungen hat, durch die die Klinke in Raststellung greift. Im Belastungsfall wird die Klinke auf Abscherung beansprucht, wodurch eine hohe Kraftaufnahme bei geringem Materialeinsatz möglich ist.

Der die Verrastung herbeiführende Querschnitt der Klinke kann groß sein, ohne daß deshalb nur eine Sitzverstellung in relativ großen Stufen möglich wird, wenn die Klinke zwei in Längsrichtung der Unterschiene nebeneinander angeordnete Klinkenarme hat, welche zum Durchgriff durch zwei benachbarte Durchbrechungen des Steges ausgebildet sind.

Die Lasche vermag sich bei einem Unfall sehr rasch gegen die Unterschiene anzulegen, wenn sie im Querschnitt entsprechend dem Querschnitt der Unterschiene geformt ist und konturnah zur Unterschiene verläuft. Die Unterschiene muß deshalb keine hohen Beschleunigungskräfte aufnehmen.

Konstruktiv besonders einfach ist die Klinke an der Lasche schwenkbar gehalten, wenn im Bereich der Lasche ein Lagerbock zur Lagerung eines Endes einer parallel zur Unterschiene verlaufenden Entriegelungsstange vorgesehen ist und wenn diese Entriegelungsstange die Klinke haltert.

Wenn der maximale Verschiebeweg der Oberschiene durch die zwischen den Verankerungen der Unterschiene angeordnete Lasche begrenzt ist, dann wird erreicht, daß kräftemäßig stets von einem Träger auf zwei Stützen ausgegangen werden kann, so daß keine unerwünscht hohen Kräfte infolge von über lange Hebelarme wirkenden Drehmomenten auftreten können.

Ein Kraftfahrzeugsitz ist natürlich besonders gut auf den Unterschienen gehalten, wenn an beiden Unterschienen jeweils eine Klinke zur Verrastung vorgesehen ist. In solchen Fällen kann es bei den bekannten Konstruktionen jedoch vorkommen, daß infolge von Unachtsamkeit des Benutzers nur an einer Unterschiene verrastet wird. Das ist immer dann kritisch, wenn gerade an derjenigen Unterschiene verrastet wird, die nicht zur Aufnahme der Gurtkräfte konzipiert ist. Diesem Mißstand kann man gemäß einer vorteilhaften Weiterbildung der Erfindung begegnen, wenn man an der der Lasche mit dem Gurtschloß gegenüberliegenden Unterschiene eine mit der Klinke der Lasche nacheilend gekoppelte Klinke vorsieht. Infolge dieser Nacheilung wird zwangsläufig sichergestellt, daß die Klinke ander Seite des Gurtschlosses stets vor der anderen Klinke einrastet und deshalb immer zumindest die Seite mit der das Gurtschloß aufnehmenden Lasche verriegelt ist.

Da an der dem Gurtschloß gegenüberliegenden Schiene auch im Falle eines Unfalls keine hohen Kräfte übertragen werden müssen, braucht dort keine die Unterschiene umgreifende Lasche vorgesehenwerden. Es genügt vielmehr, wenn die Klinke an der dem Gurtschloß gegenüberliegenden Schiene auf einem einseitig über die Unterschiene greifenden Träger mit Durchbrechungen für die Klinkenarme vorgesehen ist.

Die Erfindung läßt zahlreiche Ausführungsmöglichkeiten zu. Zur Verdeutlichung ihres Grundprinzips ist eine davon in der Zeichnung dargestellt und wird nachfolgend beschrieben. Es zeigen:

Fig. 1 eine Ansicht von der Seite auf eine erfindungsgemäß gestaltete, fahrzeugmittenseitige Führung eines Kraftfahrzeugsitzes,

Fig. 2 einen Querschnitt durch die Anordnung gemäß Figur 1 entlang der Linie II - II,

Fig. 3 eine Draufsicht auf die Anordnung gemäß Figur 1,

Fig. 4 einen Schnitt durch die Anordnung gemäß Figur 1 entlang der Linie II - II mit in die gleiche Ebene gerückten Schnitten entlang der Linie II' sowie II'' sowie montiertem Gurtschloß,

Fig. 5 die Anordnung gemäß Figur 3 im entriegelten Zustand, Fig. 6 die Anordnung gemäß Figur 4 im teilweise verriegelten Zustand.

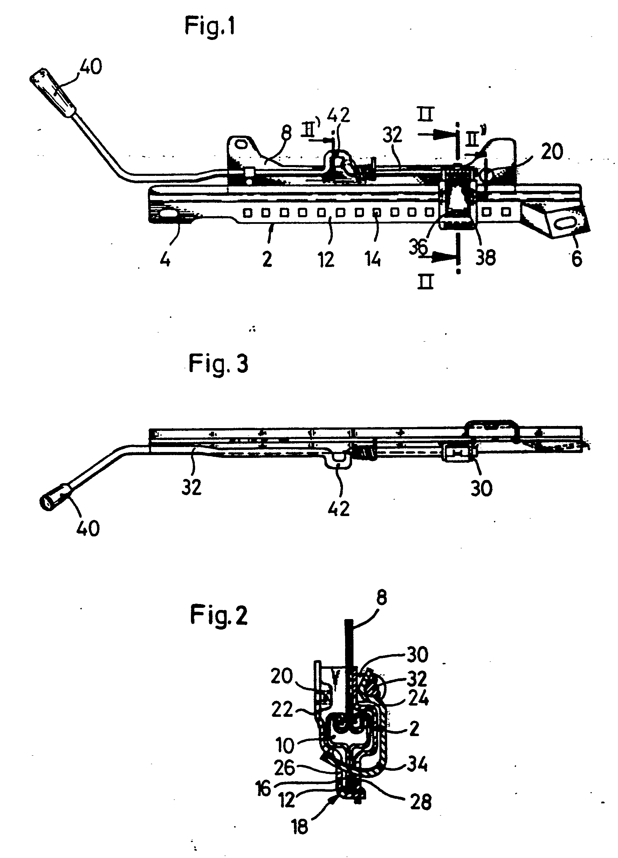

Die Figur 1 zeigt eine Unterschiene 2, welche Befestigungsenden 4, 6 aufweist, an denen sie auf nicht dargestellte Weise mit dem Unterbau des Kraftfahrzeugs verschraubt wird. In der Unterschiene 2 ist eine Oberschiene 8 verschieblich geführt, welche fest mit dem nicht gezeigten Untergestell des Kraftfahrzeugsitzes zu verbinden ist.

Wie vor allem in Verbindung mit Figur 2 zu erkennen ist, besteht die Unterschiene 2 aus einem nach oben hin offenen Hohlprofil 10 und einem nach unten gerichteten Steg 12. Dieser Steg 12 hat rechteckige Durchbrechungen, welche beispielsweise mit 14, 16 positioniert sind. Die Unterschiene 2 wird mit geringem Abstand von einer entsprechend der Unterschiene 2 geformten Lasche 18 umgriffen, die nach oben hin einen Gurtschloßbefestigungspunkt 20 hat, an dem ein übliches, nicht gezeigtes Gurtschloß befestigbar ist. Besonders die Figur 2 zeigt deutlich, daß die Lasche 18 aus zwei Laschenhälften 22, 24 besteht, die an der Oberschiene 8 angeschweißt sind, im engen Abstand die Unterschiene 2 umgreifen und unterhalb des Steges 12 miteinander verschweißt sind. Im Bereich des Steges 12 weisen die Laschenhälften 22, 24 Öffnungen 26, 28 auf, welche gleichen gegenseitigen Abstand haben wie die Durchbrechungen 14, 16 im Steg 12.

An der Oberschiene 8 ist ein Lagerbock 30 befestigt, in dem parallel zur Oberschiene 8 ein Ende einer Entriegelungsstange 32 gelagert ist. An dieser Entriegelungsstange 32 ist im Bereich der Lasche 18 eine Klinke 34 geschweißt, die zwei Klinkenarme 36, 38 hat, welche im verriegelten Zustand durch die Öffnungen 26, 28 in der Lasche 18 und durch zwei benachbarte Durchbrechungen 14, 16 des Steges 12 der Unterschiene 2 zu greifen vermögen. Diese Klinke bildet den Feststeller des Kraftfahrzeugsitzes.

Zum Entriegeln der Klinke 34 dient ein Handgriff 40 am vorderen Ende der Entriegelungsstange 32. Verschwenkt man diesen Handgriff 40 entgegen dem Uhrzeigersinn, so schwenkt die Klinke 34 aus den Durchbrechungen 14, 16, so daß der Kraftfahrzeugsitz anschließend nach vorn oder hinten verschoben werden kann. Durch Loslassen des Handgriffes 40 rastet anschließend die Klinke 34 in die der veränderten Sitzstellung entsprechenden Durchbrechungen 14, 16 des Steges 12 der Unterschiene 2.

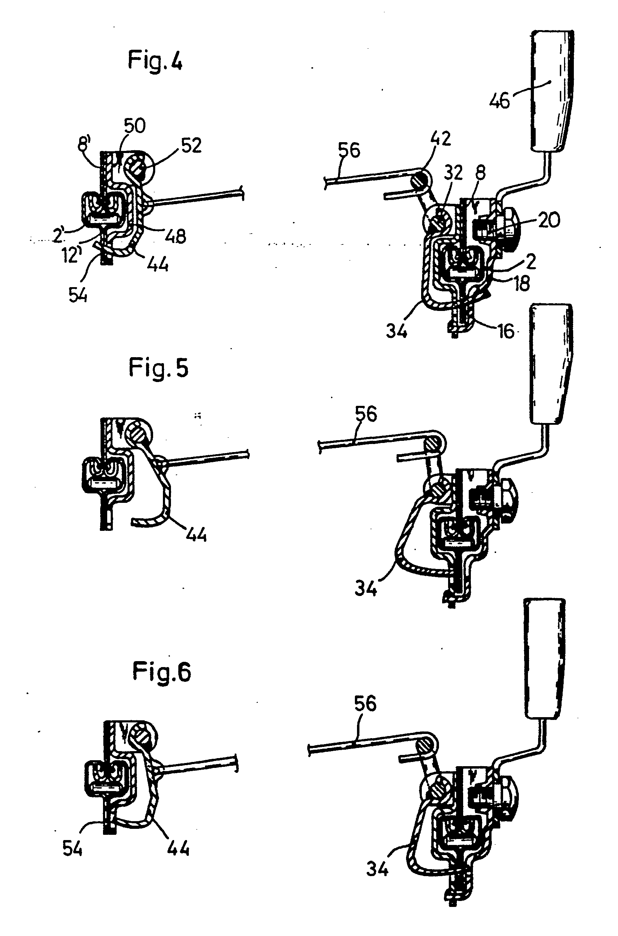

Die Figuren 2 und 3 lassen des weiteren erkennen, daß die Entriegelungsstange 32 eine Kröpfung 42 hat, mittels der eine weitere Klinke 44 zu betätigen ist, was nachfolgend an Hand der Figuren 4 bis 6 erläutert wird. Rechts in Figur 4 ist die bereits erläuterte, über die Unterschiene 2 greifende Lasche 18 zu erkennen, die mit der Klinke 34 zusammenwirkt. Ebenfalls zu erkennen ist die Entriegelungsstange 32 mit ihrer Kröpfung 42. Weiterhin zeigt Figur 4 ein an der Lasche befestigtes Gurtschloß 46.

Wie bei Kraftfahrzeugsitzen üblich, verläuft parallel zur Unterschiene 2 eine weitere Unterschiene 2', in der ebenfalls eine mit dem Sitz verbundene Oberschiene 8' geführt ist. An dieser Oberschiene 8' ist ein einseitig über die Unterschiene 2' greifender Träger 48 befestigt, an dem ein Lagerbock 50 angeschweißt ist, der mittels einer Achse 52 die Klinke 44 haltert. Diese Klinke 44 greift genau wie die Klinke 34 in Durchbrechungen 54 des Steges 12' der Unterschiene 2' und verriegelt dadurch den Sitz auf der Unterschiene 2'. Nicht dargestellt ist, daß die Klinke 44 durch eine Feder in der in Figur 4 dargestellten verriegelten Stellung vorgespannt ist. Zur Entriegelung dient ein Zugdraht 56, der einerseits an der Klinke 44 andererseits an der Kröpfung 42 der Entriegelungsstange 32 befestigt ist.

Wird die Entriegelungsstange 32 im Uhrzeigersinn verdreht, so schwenken beide Klinken 34 und 44 aus den entsprechenden Durchbrechungen 16 und 54. Die Hebelverhältnisse sind dabei so gewählt, daß die Klinke 44 früher als die Klinke 34 entriegelt. Die entriegelte Stellung beider Klinken 34, 44 ist in Figur 5 gezeigt.

Wird aus der entriegelten Stellung wieder verriegelt, so bewegt sich zunächst die Klinke 34 in ihre Verriegelungsstellung, was Figur 6 zeigt. Erst anschließend gelangt auch die Klinke 44 in die Durchbrechung 54. Dadurch ist sichergestellt, daß auf der Seite des Gurtschlosses 46 auf jeden Fall verriegelt wird.

## Patentansprüche

1. Kraftfahrzeugsitz, der mit zwei an ihm befestigten Oberschienen (8) in ortsfesten Unterschienen (2) verschieblich geführt ist, einen entriegelbaren Feststeller (34) zur Arretierung des Kraftfahrzeugsitzes in gewünschte Positionen auf der Unterschiene aufweist und an dem eine ein Gurtschloß aufnehmende Lasche (18) befestigt ist, die eine Unterschiene (2) vollständig umgreift, dadurch gekennzeichnet, daß an der Lasche (18) eine den Feststeller bildende Klinke (34) vorgesehen ist, welche mittels eines Hebels (Handhebel 40) aus Rasten bildende Durchbrechungen (14, 16) der Unterschiene (2) bewegbar ausgebildet ist.

2. Kraftfahrzeugsitz nach Anspruch 1, dadurch gekennzeichnet, daß die Unterschiene (2) aus einem nach oben offenen Hohlprofil (10) und einem nach unten gerichteten Steg (12) besteht.

3. Kraftfahrzeugsitz nach Anspruch 1 oder einem der folgenden, dadurch gekennzeichnet, daß die Rasten durch in einer Reihe hintereinander vorgesehene Durchbrechungen (14, 16) in dem Steg (12) der Unterschiene (2) gebildet sind und die Lasche (18) beidseitig der Unterschiene (2) entsprechende Öffnungen (26, 28) hat, durch die die Klinke (34) in Raststellung greift.

4. Kraftfahrzeugsitz nach Anspruch 1 oder einemder folgenden, dadurch gekennzeichnet, daß die Klinke (34) zwei in Längsrichtung der Unterschiene (2) nebeneinander angeordnete Klinkenarme (36, 38) hat, welche zum Durchgriff durch zwei benachbarte Durchbrechungen (14, 16) des Steges (12) ausgebildet sind.

5. Kraftfahrzeugsitz nach Anspruch 1 oder einem der folgenden, dadurch gekennzeichnet, daß die Lasche (18) im Querschnitt entsprechend dem Querschnitt der Unterschiene (2) geformt ist und konturennah zur Unterschiene (2) verläuft.

6. Kraftfahrzeugsitz nach Anspruch 1 oder einem der folgenden, dadurch gekennzeichnet, daß die Lasche (18) aus zumindest zwei Laschenhälften (22, 24) besteht, die an der Oberschiene (8) befestigt sind, über die Unterschiene (2) greifen und unterhalb des Steges (12) miteinander verbunden sind.

7. Kraftfahrzeugsitz nach Anspruch 1 oder einem der folgenden, dadurch gekennzeichnet, daß im Bereich der Lasche (18) ein Lagerbock (30) zur Lagerung eines Endes einer parallel zur Unterschiene (2) verlaufenden Entriegelungsstange (32) vorgesehen ist und daß diese Entriegelungsstange (32) die Klinke (34) haltert.

8. Kraftfahrzeugsitz nach Anspruch 1 oder einem der folgenden, dadurch gekennzeichnet, daß der maximale Verschiebeweg der Oberschiene (8) durch die zwischen den Verankerungen der Unterschiene (2) angeordnete Lasche (18) begrenzt ist.

9. Kraftfahrzeugsitz nach Anspruch 1 oder einem der folgenden, dadurch gekennzeichnet, daß an der der Lasche (18) mit dem Gurtschloß gegenüberliegenden Unterschiene (2') eine mit der Klinke (34) der Lasche (18) nacheilend gekoppelte Klinke (44) vorgesehen ist.

10. Kraftfahrzeugsitz nach Anspruch 9, dadurch gekennzeichnet, daß die Klinke (44) an der dem Gurtschloß (46) gegenüberliegenden Oberschiene (8') auf einem einseitig über die Unterschiene (2') greifenden Träger (48) mit Durchbrechungen (54) für die Klinkenarme vorgesehen ist.

## Revendications

1. Siège de véhicules automobiles qui, monté déplaçable dans des rails inférieurs fixes (2) par deux rails supérieurs (8) fixés sur lui, comporte un dispositif d'arrêt (34) déverrouillable pour le blocage du siège du véhicule aux positions désirees sur le rail inférieur et sur lequel est assujettie une patte (18) destinee a recevoir un verrou de ceinture et entourant complètement un rail inférieur (2), caractérisé par le fait que sur la patte (18) est prévu un cliquet (34) qui forme le dispositif d'arrêt et qui peut être extrait d'évidements (14, 16), formant crans, du rail inférieur (2) au moyen d'un levier (poignée 40).

2. Siège de vehicules automobiles selon la revendication 1, caractérisé par le fait que le rail inférieur (2) est constitué par un profilé creux (10) ouvert vers le haut et par une nervure (12) dirigée vers le bas.

3. Siège de véhicules automobiles selon la revendication 1 ou l'une des suivantes, caractérisé par le fait que les crans sont formés par des évidements (14, 16) alignés en une rangée les uns derrière les autres dans la nervure (12) du rail inférieur (2) et que la patte (18), des deux côtés du rail inférieur (2), comporte des perçages correspondants (26, 28) dans lesquels s'engage le cliquet (34) en position de verrouillage.

4. Siège de véhicules automobiles selon la revendication 1 ou l'une des suivantes, caractérisé par le fait que le cliquet (34) comporte deux bras (36, 38) qui sont disposés l'un à côté de l'autre dans le sens longitudinal du rail inférieur (2) et qui s'engagent dans deux evidements voisins (14, 16) de la nervure (12).

5. Siège de véhicules automobiles selon la revendication 1 ou l'une des suivantes, caractérisé par le fait que la section transversale de la patte (18) épouse la forme de la section transversale du rail inférieur (2) et suit étroitement le contour du rail inférieur (2).

6. Siège de véhicules automobiles selon la revendication 1 ou l'une des suivantes, caractérisé par le fait que la patte (8) se compose au moins de deux moitiés (22, 24), qui sont fixées sur le rail supérieur (8), qui coiffent le rail inférieur (2) et qui sont mutuellement raccordées en dessous de la nervure (12).

7. Siège de véhicules automobiles selon la revendication 1 ou l'une des suivantes, caractérisé par le fait que dans la zone de la patte (18) est prévue une selle d'appui (30) pour le montage d'une extrémité d'une tige de déverrouillage (32) disposée parallèlement au rail inférieur (2) et que cette tige de déverrouillage (32) maintient le cliquet (34).

8. Siège de véhicules automobiles selon la revendication 1 ou l'une des suivantes, caractérisé par le fait que la course maximale du rail supérieur (8) est limitée par la patte (18) disposée entre les ancrages du rail inférieur (2).

9. Siège de véhicules automobiles selon la revendication 1 ou l'une des suivantes, caractérisé par le fait que sur le rail inférieur (2'), situé du côté opposé a la patte (18) portant le verrou de ceinture, est prévu un cliquet (44) accouplé avec phase de retard au cliquet (34) de la patte (18).

10. Siège de véhicules automobiles selon la revendication 9, caractérisé par le fait que le cliquet (44) sur le rail supérieur (8'), situé du côté opposé au verrou de ceinture (46), est prévu sur un support (48) coiffant d'un côté le rail inférieur (2') et muni d'évidements (54) pour les bras du cliquet.

**Claims**

1. Motor vehicle seat which has fixed to it two upper rails (8) which are slideably guided in fixed lower rails (2), an unlockable locking device (34) for locking the motor vehicle seat in desired positions on the lower rail and to which is secured a bracket (18), for receiving a seat belt lock, which completely encompasses one lower rail (2), characterised in that the bracket (18) is provided with a latch (34), forming the locking device, which is adapted to be moved by means of a lever (hand lever 40) out of perforations (14, 16) forming notches in the lower rail (2).

2. Motor vehicle seat according to claim 1, characterised in that the lower rail (2) consists of a hollow profile (10) which is open towards the top and a web (12) which is directed downwards.

3. Motor vehicle seat according to claim 1 or one of the subsequent claims, characterised in that the notches are formed by a series of perforations (14, 16) provided one after another in the web (12) of the lower rail (2), and the bracket (18) on both sides of the lower rail (2) has corresponding openings (26, 28) which, in the locking position, are engaged by the latch (34).

4. Motor vehicle seat according to claim 1 or one of the subsequent claims, characterised in that the latch (34) has two latch arms (36, 38), arranged side by side in the longitudinal direction of the lower rail (2), which are adapted to penetrate two adjacent perforations (14, 16) of the web (12).

5. Motor vehicle seat according to claim 1 or one of the subsequent claims, characterised in that the bracket (18) in cross-section is shaped to correspond to the cross-section of the lower rail (2) and follows as close as possible the contours of the lower rail (2).

6. Motor vehicle seat according to claim 1 or one of the subsequent claims, characterised in that the bracket (18) consists of at least two halves (22, 24), which are secured to the upper rail (8), which encompass the lower rail (2) and are connected together below the web (12).

7. Motor vehicle seat according to claim 1 or one of the subsequent claims, characterised in that in the region of the bracket (18) there is provided a bearing block (30) for mounting one end of an unlocking bar (32) running parallel to the lower rail (2), and that this unlocking bar (32) holds the latch (34).

8. Motor vehicle seat according to claim 1 or one of the subsequent claims, characterised in that the maximum sliding path of the upper rail (8) is limited by the bracket (18) arranged between the anchoring means of the lower rail (2).

9. Motor vehicle seat according to claim 1 or one of the subsequent claims, characterised in that on the lower rail (2') opposite to the bracket (18) with the seat belt lock there is provided a latch (44) coupled to the latch (34) of the bracket (18) so as to lag behind it.

10. Motor vehicle seat belt according to claim 9, characterised in that the latch (44) on the upper rail (8') opposite the seat belt lock (46) is provided with a support (48), with perforations (54) for the latch arms, which encompasses on one side the lower rail (2').

Fig.1

Fig. 3

Fig. 2

Fig.4

Fig.5

Fig.6